# EUROPÄISCHE PATENTANMELDUNG

(11) **EP 3 718 814 A1**
(43) Veröffentlichungstag der Anmeldung: **07.10.2020**
(21) Anmeldenummer: 20161344.5
(22) Anmeldetag: 06.03.2020
(51) Int. Cl.: B60L 53/65, B60L 53/66, B60L 53/68, G01R 22/06, H04L 9/32, H04L 29/06

(54) **VERFAHREN UND VORRICHTUNG ZUR ZUORDNUNG EINES VON EINER LADESTATION ERFASSTEN MESSWERTES ZU EINEM NUTZER**

(30) Priorität: 04.04.2019 DE 102019108891
(71) Anmelder: Innogy SE, 45128 Essen (DE)
(72) Erfinder: Lewandowski, Christian, 59425 Unna (DE); Skrbic, Srdan, 44265 Dortmund (DE); Riemenschneider, Holger, 44357 Dortmund (DE)
(74) Vertreter: Cohausz & Florack

(57) **Zusammenfassung**

Verfahren zur Sicherung von Messwerten einer Ladestation umfassend Empfangen eines ersten Datensatzes (30) von einem Ladestationscontroller (16) umfassend zumindest Informationen (34) zu einem Ladevorgang und einen ersten Messgerätezählerstand (32a), wobei der erste Messgerätezählerstand (32a) die von einem Fahrzeug (6) von der Ladestation (2) bezogene Energiemenge repräsentiert und von einem Messgerät (10) erfasst wird, Beziehen eines zweiten Messgerätezählerstand (32b), wobei der zweite Messgerätezählerstand (32b) die von einem Fahrzeug (6) von der Ladestation (2) bezogene Energiemenge repräsentiert und von einem Messgerät (14) erfasst wird, Ersetzen des empfangenen, in dem Datensatz (30) enthaltenen ersten Messgerätezählerstands (32a) durch den bezogenen zweiten Messgerätezählerstand (32b), Erstellen eines Datenpakets (36) umfassend zumindest den zweiten Messgerätezählerstand (32b) und zumindest Teile der Information (34) zu dem Ladevorgang, Erstellen einer eindeutigen Beschreibung (40) des Datenpakets (36), Übermitteln zumindest des Datenpakets (36) und der Beschreibung (40) an eine Abrechnungszentrale (22).

## Beschreibung

Der Gegenstand betrifft ein Verfahren als auch eine Vorrichtung zur Sicherung von in einer Ladestation erfassten Messwerte.

Die Verbreitung elektrisch betriebener Fahrzeuge wird vermutlich in naher Zukunft rapide zunehmen. Mit der Verbreitung von Elektrofahrzeugen, die mit einem Elektromotor betrieben werden, sollte jedoch sichergestellt werden, dass diese in einfachster Weise mit Energie versorgt werden können. Hierzu sollte eine funktionierende Infrastruktur zur Verfügung gestellt werden.

Insbesondere sollte die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es angebracht, dass auch außerhalb des häuslichen Umfeldes ein Laden der Fahrzeuge möglich ist. Hierfür sollten in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit von elektrischer Energie bzw. von Ladestationen ist ein entscheidendes Kriterium für die Akzeptanz von Elektrofahrzeugen.

Bei in öffentlichen Bereichen installierten Ladestationen muss jedoch sichergestellt werden, dass der Kunde die bezogene Energie bezahlt. Auch sollte sichergestellt werden, dass der Kunde vor dem Beziehen elektrischer Energie Kenntnis über die zu erwartenden Kosten hat. Entsprechend des herkömmlichen Tankvorgangs sollte der Kunde unmittelbar vor dem Aufladen der Batterie wissen, welche Kosten ihn erwarten. So sollte dem Kunden beispielsweise der Preis für eine Kilowattstunde bekannt sein. Darüber hinaus sollte sichergestellt sein, dass der Kunde auch tatsächlich nur die Energiemenge in Rechnung gestellt bekommt, die er auch bezogen hat. Schließlich muss sichergestellt sein, dass der Kunde auch nur für solche Tankvorgänge bezahlt, die er auch tatsächlich bewirkt hat. Es muss sicher verhindert werden, dass Messdaten einzelner Tankvorgänge mehreren Kunden parallel in Rechnung gestellt werden.

Insbesondere im Fall der Elektromobilität werden Ladevorgänge von unterschiedlichsten Kunden an ein und derselben Ladestation vorgenommen. Die Ladevorgänge stehen weder unter der ständigen Kontrolle des Messstellenbetreibers noch des Kunden, so dass sichergestellt werden muss, dass die von der Ladestation bzw. dem Messgerät in der Ladestation aufgenommenen Messwerte unverfälscht und eindeutig einem Kunden zuordenbar an eine Abrechnungszentrale übermittelt werden.

Somit ist besonders auf die Integrität, Authentizität, Überprüfbarkeit und Zuordenbarkeit der sowohl zwischen Fahrzeug und Ladestation als auch zwischen Ladestation und Abrechnungszentrale übertragenen Abrechnungsdaten zu achten. Zum Einen ist es notwendig, dass die Daten über die Lademenge und/oder den Nutzer unverfälscht bleiben. Zum Anderen ist für Abrechnungszwecke eine Übertragung von Messdaten (Abrechnungsdaten) von der Ladestation an ein Abrechnungssystem vor Manipulationen zu sichern. Der Nutzer muss sicherstellen und überprüfen können, dass ihm nur die von ihm bezogene Energie in Rechnung gestellt wird. Auch muss sichergestellt werden, dass ein Ladevorgang nur einmalig dem richtigen Nutzer zur Verfügung gestellt wird.

Problematisch ist jedoch, dass eine Vielzahl an bereits installierten Ladestationen für eine gesicherte Abrechnung nicht eingerichtet ist. Das liegt daran, dass ggf. falsche und/oder nicht gesicherte und/oder zertifizierte Messgeräte (Zähler) verbaut sind und/oder dass die erfassten Messwerte nicht gesichert an eine Abrechnungszentrale übermittelt werden. Die Übermittlung von Daten betreffend den Ladevorgang ist beispielsweise im OCCP Protokoll der Open Charge Alliance geregelt. Dieses Protokoll erlaubt eine bidirektionale Kommunikation zwischen einer Ladestation und einer Zentrale zur Steuerung des Ladevorgangs. Eine Sicherung der Messwerte sieht dieses Protokoll aber nicht vor.

Aus diesem Grunde lag dem Gegenstand die Aufgabe zugrunde, ein Verfahren sowie eine Vorrichtung zur Verfügung zu stellen, welche eine fälschungssichere Erfassung, Kommunikation und Abrechnung von Messdaten von über eine Ladestation bezogener Energie gewährleisten.

Diese Aufgabe wird gegenständlich durch ein Verfahren nach Anspruch 1 ein Sicherungsmodul nach Anspruch 13 sowie eine Ladestation nach Anspruch 15 gelöst.

Beim Ladevorgang bezieht das Elektrofahrzeug elektrische Energie von der Ladestation. In der Ladestation wird diese elektrische Energie mit Hilfe eines Messgerätes (Zählers) gemessen. Während des Ladevorgangs als auch beim Abschluss des Ladevorgangs ist es notwendig, dass die bezogene Energiemenge für Abrechnungszwecke erfasst wird und der Benutzer des Fahrzeugs Kenntnisse über die bezogene Energiemenge erhält. Die Messung an sich wird in der Regel nicht zu beanstanden sein, da diese durch einen geeichten Zähler vorgenommen wird. Es ist aber sicherzustellen, dass die Messwerte gesichert der Abrechnungszentrale zugeführt werden.

Bei Bestandsladestationen wird von einem Messgerät ein Messgerätezählerstand erfasst. Dieser Messgerätezählerstand repräsentiert eine Energiemenge, die ein Fahrzeug von der Ladestation bezogen hat.

Der Zählerstand sollte zusammen mit weiteren Informationen zum Ladevorgang, an eine Zentrale übermittelt werden. Dazu können Bestandsladestationen mit einer Zentrale über ein Protokoll kommunizieren, bei dem Steuerungsinformationen an die Ladestation von der Zentrale gesendet und in der Ladestation empfangen werden sowie Informationen zum Status der Ladestation und/oder dem Ladevorgagn von der Ladestation an die Zentrale gesendet und in der Zentrale empfangen werden. Dieses Protokoll ist z.B. das OCPP Protokoll.

Bei diesem Protokoll kann beispielsweise einer Kennung der Ladestation, Ortsinformationen, Zeitstempeln, einer Nutzeridentifikation und dergleichen z.B. in zumindest einem ersten Datensatz übermittelt werden. Der Datensatz kann ein Datenfeld umfassen, in dem ein Messgerätezählerstand übermittelt werden kann. Das Protokoll sieht aber weder vor, dass dieses Datenfeld genutzt werden muss, noch eine Sicherung der in diesem Datenfeld enthaltenen Informationen.

Somit ist es möglich, dass bei der Übermittlung des Messgerätezählerstands von dem Messgerät an den Ladestationscontroller, welcher den Datensatz erstellt und/oder bei der anschließenden Übermittlung des Datensatzes an die Zentrale, Manipulationen an dem Messgerätezählerstand durchgeführt werden. Ferner ist es möglich, dass der Datensatz bei dem Transport zwischen der Ladestation und der Zentrale abgefangen und/oder verändert wird. Beides führt dazu, dass der in der Zentrale empfangene Messgerätezählerstand nicht vertrauenswürdig ist.

Es wird daher vorgeschlagen, dass ein Messgerätezählerstand bezogen wird. Hierfür kann ein Sicherungsmodul vorgesehen sein, welches den Messgerätezählerstand bezieht. Der bezogene Messgerätezählerstand wird von einem Messgerät erfasst und repräsentiert die Energiemenge, die durch ein Fahrzeug an der Ladestation bezogen wurde.

Zwischen dem Messgerät und dem Sicherungsmodul kann eine geschützte Kommunikation vorgesehen sein. Insbesondere kann die Kommunikation signiert und/oder verschlüsselt sein, sodass bei der Übertragung von dem Messgerät an das Sicherungsmodul der Messgerätezählerstand unverfälscht bleibt.

Dieser bezogene Messgerätezählerstand, dessen Wert durch die Sicherung der Kommunikation zwischen dem Sicherungsmodul und dem Messgerät vertrauenswürdig ist, kann genutzt werden, um den Datensatz anzureichern oder einen in dem Datensatz enthaltenden Messgerätezählerstand zu ersetzen.

Wie erläutert, wird ein Datensatz von einem Sicherungsmodul empfangen. Der Datensatz kann ein Datenfeld für einen Messgerätezählerstand enthalten. Dieses Feld kann bereit gefüllt oder leer sein. Auch kann der Datensatz kein extra Datenfeld für einen Messgerätezählerstand enthalten. Auch dann wird für das Datenpaket der bezogene Messgerätezählerstand genutzt. Erfindungsgemäß wird nunmehr der empfangene Datensatz mit dem bezogenen Messgerätezählerstand ergänzt (angereichert). Dabei kann ein bereits in dem Datensatz vorhandener Messgerätezählerstand durch den bezogenen Messgerätezählerstand ersetzt werden, ein entsprechendes Datenfeld mit dem bezogenen Messgerätezählerstand gefüllt werden oder ein neues Datenfeld mit dem bezogenen Messgerätezählerstand angelegt werden. Das heißt, dass für Abrechnungszwecke ein durch das Sicherungsmodul bezogener Messgerätezählerstand verwendet wird, der in dem Datenpaket gesichert wird. Dieser kann unahbängig von einem Messgerätezählerstand bezogen werden, der in dem Datensatz bereits enthalten ist. Sollte ein ursprünglich in dem Datensatz des Ladestationscontrollers enthaltener Messgerätezählerstand vorhanden sein, kann dieser durch einen bezogenen, hiervon unabhängigen Messgerätezählerstand ersetzt werden.

Der bezogene Messgerätezählerstand zusammen mit zumindest Teilen der in dem Datensatz enthaltenen Informationen zu dem Ladevorgang wird verwendet, um ein Datenpaket zu erstellen. Anschließend wird für das Datenpaket eine eindeutige Beschreibung erstellt, beispielsweise in der Form einer digitalen Signatur und das Datenpaket und die Beschreibung werden an eine Abrechnungszentrale übermittelt.

Durch die eindeutige Beschreibung ist das Datenpaket gesichert gegenüber Verfälschungen. Da einerseits der in dem Datenpaket enthaltene Messgerätezählerstand durch eine Sicherung der Kommunikation zwischen dem Messgerät und dem Sicherungsmodul nicht zu beanstanden ist und andererseits die Kommunikation zwischen der Ladestation und der Abrechnungszentrale durch die eindeutige Beschreibung gesichert ist und ebenfalls vor Manipulationen sicher ist, ist der in der Abrechnungszentrale enthaltene Messgerätezählerstand für eine Abrechnung gegenüber einem Kunden geeignet.

Um eine nutzerbezogene Abrechnung zu ermöglichen, wird auch vorgeschlagen, in oder durch die Ladestation eine Nutzeridentifikation (Kunden ID / Vertrags ID oder dergleichen) zu erfassen. Die Nutzeridentifikation kann eine Zeichen-, Ziffern- und/oder Zahlenfolge sein. Die Nutzeridentifikation kann mit einem Passwort verknüpft sein.

Der Nutzer kann die Nutzeridentifikation vor einem Ladevorgang der Ladestation mitteilen. Mit Hilfe der so erfassten Nutzeridentifikation kann der gemessene Messgerätezählerstand (Messwert) statisch mit einem bestimmten Nutzer verknüpft werden. Es wird vorgeschlagen, dass dem Datenpaket gebildet aus zumindest dem Messwert und der Nutzeridentifikation eine eindeutige Beschreibung zugeordnet wird.

Die eindeutige Beschreibung kann dergestalt sein, dass diese das Datenpaket eineindeutig beschreibt. Eine Veränderung an dem Datenpakt würde zu einer veränderten Beschreibung führen. Somit ist es möglich, ausgehend von einem empfangenen Datenpaket, in Kenntnis der Erstellungsvorschrift für die eindeutige Beschreibung, eine Vergleichsbeschreibung zu erstellen und mit der ebenfalls empfangenen eindeutigen Beschreibung zu vergleichen. Sind die beiden Beschreibung voneinander unterschiedlich, so ist von einer Veränderung des Datenpakets, also zumindest von einer Veränderung der Nutzeridentifikation oder des Messwertes auszugehen.

Die einander zugeordneten Datenpakete und eindeutigen Beschreibungen werden einer Abrechnungszentrale zur Verfügung (von der Ladesation gesendet, von der Abrechnungszentrale empfangen) gestellt. Die Abrechnungszentrale kann zunächst mit der ihr bekannten Rechenvorschrift aus dem empfangenen Datenpaket eine Vergleichsbeschreibung errechnen und diese mit der mit dem Datenpaket verknüpften Beschreibung vergleichen. Bestehen Unterschiede, kann auf eine Datenmanipulation geschlossen werden. In diesem Fall kann der Messwert verworfen oder andere Maßnahmen ergriffen werden. Ist der Vergleich positiv, so kann dem Datenpaket die Nutzeridentifikation entnommen werden und dem zugeordneten Nutzer (Kunden) die bezogene Energiemenge in Rechnung gestellt werden.

Das Datenpaket zusammen mit der Beschreibung kann abgespeichert werden. Hierdurch ist ein nachträglicher Nachweis möglich, dass ein bestimmter Kunde auch einen zugeordneten Ladevorgang initiiert hat, in dem er seine Nutzeridentifikation bereitgestellt hat.

Es wird vorgeschlagen, dass der Datensatz in einem ersten Protokoll zur Kommunikation zwischen einer Ladestation und einer Abrechnungszentrale von dem Ladestationscontroller in dem Sicherungsmodul empfangen wird. Der Ladestationscontroller kann derart eingerichtet sein, dass er den Datensatz in dem ersten Protokoll formatiert. Ein solches Protokoll kann beispielsweise den Freigabeprozess eines Ladevorgangs definieren. Auch kann in einem solchen Protokoll, wenn auch ungesichert, die Kommunikation von Informationen zu bezogenen Energiemengen erfolgen. Ein solches Protokoll ist insbesondere ein OCCP-Protokoll, welches von der Open Charge Alliance veröffentlicht wird, sein.

Zur Sicherung der Kommunikation der abrechnungsrelevanten Informationen von der Ladestation an die Abrechnungszentrale ist es jedoch notwendig, dass das Datenpaket und die Beschreibung in einem zweiten, von dem ersten Protokoll verschiedenen Protokoll erstellt und von dem Sicherungsmodul an eine Zentrale (auch Abrechnungszentrale, Server, Abrechnungsserver genannt) gesendet und dort empfangen wird. Ein solches unter anderem von der Anmelderin entwickeltes Protokoll (LG2WAN) kann eine eichrechtlich gesicherter Übertragung von abrechnungsrelevanten Daten gewährleisten.

In dem Sicherungsmodul kann eine Protokollumsetzung von dem ersten in das zweite Protokoll für eine Kommunikation von dem Ladestationscontroller an die Zentrale erfolgen. In dem Sicherungsmodul kann eine Protokollumsetzung von dem zweiten in das erste Protokoll für eine Kommunikation von der Zentrale an den Ladestationscontroller erfolgen. Dabei können Steuersignale und/oder Statussignale zwischen den Protokollen umgesetzt werden.

Durch die Nutzung des zweiten Protokolls können insbesondere Messgerätezählerstände, Nutzeridentifikationen und/oder Ladestationsidentifikationen und/oder Zeitstempel gesichert von dem Sicherungsmodul an die Zentrale übertragen werden. Bei dem zweiten Protokoll ist insbesondere auch eine Zeitsynchronisation zwischen einem Zeitserver, insbesondere in der Abrechnungszentrale und einem Zeitgeber in der Ladestation, insbesondere in dem Messgerät oder dem Sicherungsmodul definiert, sodass auch eine korrekte Zuordnung von Zeitangaben zu Messgerätezählerständen erfolgen kann.

Es wird vorgeschlagen, dass mit dem Datensatz ein zweiter Messgerätezählerstand in dem Sicherungsmodul empfangen wird, wobei der zweite Messgerätezählerstand die von einem Fahrzeug von der Ladestation bezogene Energiemenge repräsentiert und von einem Messgerät erfasst wird. Dabei kann ein Datenfeld des Datensatzes mit dem zweiten Messgerätezählerstand gefüllt sein.

Dann wird vorgeschlagen, dass der zweite Messgerätezählerstand durch den bezogenen Messgerätezählerstand ersetzt wird und anschließend gesichert in dem Datenpaket an die Zentrale übermittelt werden kann. In dem Sicherungsmodul erfolgt somit eine Anreicherung der Informationen zu dem Ladevorgang mit einem gesondert bezogenem Messgerätezählerstand.

Gemäß einem Ausführungsbeispiel wird vorgeschlagen, dass beim Beziehen des Messgerätezählerstands von dem Messgerät durch das Sicherungsmodul der Messgerätezählerstand von dem Messgerät signiert und/oder verschlüsselt wird. Hierdurch wird sichergestellt, dass bei der Übertragung des Messgerätezählerstands von dem Messgerät an das Sicherungsmodul, dieser unverfälscht bleibt. Somit ist ein Angriff auf den Messgerätezählerstand innerhalb der Ladestation ausgeschlossen. Insbesondere ist es möglich, Sicherungsmodul und Messgerät miteinander datentechnisch zu verknüpfen, insbesondere durch private und öffentliche Schlüssel. Ein privater Schlüssel kann in den jeweiligen Geräten installiert sein und mit Hilfe des öffentlichen Schlüssels können die Geräte ihre Kommunikation signieren, sodass eine Authentizität der übermittelten Information gesichert ist.

Gemäß einem Ausführungsbeispiel wird vorgeschlagen, dass der zweite Messgerätezählerstand von einem zweiten Messgerät durch den Ladestationscontroller erfasst wird und dass der bezogene Messgerätezählerstand von einem ersten Messgerät durch das Sicherungsmodul erfasst wird oder dass der zweite Messgerätezählerstand sowie der bezogene Messgerätezählerstand von einem gleichen Messgerät durch den Ladestationscontroller und das Sicherungsmodul erfasst werden. Dabei kann bevorzugt der bezogene Messgerätezählerstand von dem Messgerät signiert und/oder verschlüsselt dem Sicherungsmodul und der zweite Messgerätezählerstand von dem Messgerät unsigniert und/oder unverschlüsselt dem Ladestationscontroller bereitgestellt werden.

Das Sicherungsmodul kann zusammen mit dem ersten Messgerät als Nachrüstlösung in einer Ladestation verbaut werden. Mit Hilfe des ersten Messgerätes, welches insbesondere datentechnisch mit dem Sicherungsmodul verknüpft ist, kann innerhalb der Ladestation eine Energiemenge erfasst werden, die die von einem Fahrzeug von der Ladestation bezogene Energie repräsentiert. Das erste Messgerät misst somit dieselbe Energie, die das zweite Messgerät misst, diese Information wird jedoch als bezogener Messgerätezählerstand dem Sicherungsmodul, insbesondere datentechnisch gesichert, mitgeteilt. Das Sicherungsmodul kann auch alleine als Nachrüstlösung vergesehen sein, und den Messgerätezahlerstand gesichert von einem bereits vorhandenen Messgerät beziehen.

Ein Messgerät kann bereits dazu eingerichtet sein, mit verschiedenen Kommunikationspartnern Messgerätezählerstände auszustauschen. Wenn nur ein Messgerät genutzt wird, kann eine Übertragung des Messgerätezählerstands an das Sicherungsmodul datentechnisch in der beschriebenen Art gesichert werden. Eine Übertragung des Messgerätezählerstands an den Ladestationscontroller, der den Datensatz erstellt, kann dabei datentechnisch ungesichert bleiben.

Das Sicherungsmodul bezieht den Messgerätezählerstand von dem Messgerät und kann den zweiten Messgerätezählerstand, den es ggf. in dem Datensatz empfangen hat, ersetzen. Der zweite Messgerätezählerstand ist insbesondere nicht gesichert, so dass dieser verfälscht worden sein kann. Durch ein Ersetzen mit dem bezogenen Messgerätezählerstand kann sichergestellt werden, dass der Messgerätezählerstand, der anschließend in dem Datenpaket an die Abrechnungszentrale übermittelt wird, ein gesicherter Messgerätezählerstand ist.

Gemäß einem Ausführungsbeispiel wird vorgeschlagen, dass der Datensatz von einem in oder an der Ladestation angeordneten Sicherungsmodul von dem Ladestationscontroller empfangen wird und dass der Messgerätezählerstand von dem Sicherungsmodul bezogen wird. Das Sicherungsmodul kann innerhalb der Ladestation integriert werden oder von außen an der Ladestation angeordnet werden. Eine Kommunikationsverbindung mit einem Messgerät, insbesondere dem ersten Messgerät, kann vorhanden sein, die drahtgebunden oder drahtlos ist. Über eine solche Kommunikationsstrecke kann ein gesicherter Austausch von Messgerätezählerständen zwischen dem Messgerät und dem Sicherungsmodul erfolgen. Wenn nachfolgend von dem Messgerät oder dem ersten Messgerät die Rede ist, so dass damit das Messgerät gemeint sein, welches zusätzlich in der Ladestation verbaut ist oder das Messgerät, welches sowohl mit dem Ladestationscontroller als auch dem Sicherungsmodul kommunizieren und Messgerätezählerstände austauschen kann.

Gemäß einem Ausführungsbeispiel wird vorgeschlagen, dass das Sicherungsmodul und das Messgerät gesichert, insbesondere mittels SML kommunizieren. Dabei kann das Sicherungsmodul als Smart-Meter-Gateway und das Messgerät als Messeinrichtung im Sinne der technischen Richtlinie TR-03109 des Bundesamts für Sicherheit in der Informationstechnik (BSI) eingerichtet sein. Das Messgerät kann insbesondere als EDL21- oder EDL40-Zähler eingerichtet sein.

Gemäß einem Ausführungsbeispiel wird vorgeschlagen, dass die eindeutige Beschreibung eine Signatur zur dauerhaften, eindeutigen Protokollierung eines mit einer Nutzeridentifikation verknüpften Messgerätezählerstands ist.

Im Nachfolgenden werden die Begriffe "Signatur", "signieren" etc. im Sinne einer elektronischen, datentechnischen Signatur verwendet. Auch kann durch das elektronische Signieren des Datenpakets sichergestellt werden, dass dieses nicht mehr nachträglich manipuliert wird.

Wie bereits beschrieben wurde, wird auch vorgeschlagen, dass die eindeutige Beschreibung derart mit dem Inhalt des Datenpakets verknüpft ist, dass eine Veränderung des Inhalts des Datenpakets eine veränderte Beschreibung bewirkt. Es kann somit eine eins-zu-eins Beziehung zwischen dem Datenpaket und der Beschreibung erstellt werden. Verändert sich auch nur ein Bit im Datenpaket, würde dies zu einer Veränderung der Beschreibung führen. In der Ladestation, vorzugsweise dem Messgerät der Ladestation, ist eine Rechenvorschrift hinterlegt, die es ermöglicht, aus dem Datenpaket eine eindeutige Beschreibung zu erstellen. Dies kann unter Verwendung von Schlüsseln, wie nachfolgend auch beschrieben wird, erfolgen. Ist die Rechenvorschrift und ggf. der Schlüssel im Empfänger bekannt, so kann dieser aus dem empfangenen Datenpaket eine Vergleichsbeschreibung errechnen und mit der dem Datenpaket zugeordneten Beschreibung vergleichen und somit Manipulationen entdecken. Auch ist der eindeutige Nachweis einer Nutzung einer Ladestation durch einen Kunden mit dem beschriebenen Verfahren möglich.

Um die eindeutige Beschreibung zu erstellen, wird auch vorgeschlagen, dass zumindest eines Teils eines Messgeräteschlüssels erfasst wird. Dieser kann ein privater Schlüssel sein, der es erlaubt die eindeutige Bezeichnung so zu erstellen, dass diese manipulationssicher ist. Der Messgeräteschlüssel kann auch als Sicherungsmodulschlüssel gebildet sein. Die Ausführungen zu dem Messgeräteschlüssel gelten sinngemäß auch für einen Sicherungsmodulschlüssel.

Auch wird vorgeschlagen, die ersten Signatur des Datenpakets mit Hilfe des Messgeräteschlüssels erstellt wird. Die Signatur kann über das gesamte Datenpaket oder einen Hashwert des Datenpakets errechnet werden. Auch ist es möglich, zunächst das Datenpaket aus Messgerätezählerstand und Informationen zu dem Ladevorgang, z.B. eine Nutzeridentifikation zu signieren, das Datenpaket und die Signatur in einem neuen Datenpaket zusammen zu fassen und im Anschluss weitere Daten, wie sie nachfolgend aufgezählt werden, dem neuen Datenpaket hinzuzufügen. Dieses neue Datenpaket mit den weitern Daten kann dann erneut signiert werden.

Gemäß einem Ausführungsbeispiel wird vorgeschlagen, dass das Datenpaket neben dem Messgerätezählerstand zumindest weitere Daten aus einer Nutzeridentifikation, einer Messgeräteidentifikation, einem Messgerätestatus, Zeitinformationen, Datumsinformationen, einer Vertragsidentifikation, einem öffentlichen Messgeräteschlüssel oder einem Zeit-Index enthält. Diese Aufzählung ist nicht abschließend und kann um weiter relevanten Daten ergänzt werden.

Es wird vorgeschlagen, dass eine Nutzeridentifikation von der Ladestation drahtgebunden, mittels RFID, manueller Nutzereingabe, biometrischer Nutzerdaten, von dem Fahrzeug und/oder drahtlos erfasst wird. Hierbei ist es möglich, dass die Nutzeridentifikation mittels biometrischer Verfahren (Fingerabdruckscan, Gesichtsscan, Irisscan oder dergleichen) durch die Ladestation erfasst wird. Auch kann die Nutzeridentifikation von einem Transponder in einem Fahrzeugschlüssel oder einem anderen Transponder, z.B. in dem Ladekabel oder dem Ladekabelstecker, ausgelesen werden. Darüber hinaus kann die Nutzeridentifikation in einem Speicher in dem Ladekabel oder dem Ladekabelstecker hinterlegt sein und von dort durch die Ladestation ausgelesen werden.

Eine Identifikation des Messgeräts kann eine Gerätenummer sein. Mit Hilfe zumindest dieser Werte kann das Datenpaket erweitert werden.

Mit Hilfe eines eindeutigen, aus dem Datenpaket und einem dem Messgerät (Zähler) oder der Ladestation oder dem Sicherungsmodul zugeordneten Schlüssels erstellten, vorzugsweise binären Wertes, kann eine Signatur errechnet wird. Aus dem Datenpaket kann ein Referenzwert, beispielsweise ein Hash-Code, errechnet werden. Dieser Referenzwert kann auch zur Berechnung der Signatur verwendet werden. Diese Signatur kann beispielsweise mit Hilfe des Hash-Codes und eines dem Messgerät (Zähler) oder der Ladestation oder dem Sicherungsmodul zugeordneten Schlüssels errechnet werden. Auch kann eine Signatur unmittelbar aus dem Datenpaket und dem dem Messgerät (Zähler) oder der Ladestation zugeordneten Schlüssel errechnet werden.

Signieren kann ein Erstellen eines Kryptogrammes als Signatur mit Hilfe eines vorzugsweise binären Schlüssels sein, wobei mit Hilfe des Schlüssels und des zu signierenden Datenpaketes bzw. des hieraus erstellen Referenzwertes ein vorzugsweise binäres Kryptogramm erstellt wird. Mittels eines solchen Kryptogrammes ist eine Überprüfung möglich, ob das Datenpaket tatsächlich von der Ladestation oder dem Sicherungsmodul erstellt wurde.

Beispielsweise bei einem Ladevorgang ist es möglich, dass der Nutzer zu Beginn eines Ladevorgangs die Messgeräteidentifikation, die beispielsweise außen am Gehäuse der Ladestation angeordnet ist, notiert und zusätzlich die Uhrzeit des Beginns des Ladevorgangs notiert. Zum Ende der Ladevorgang kann der Nutzer erneut die Urzeit notieren.

Wenn diese Zeitinformationen zusammen mit dem Messgerätezählerstand Teil des jeweiligen Datenpakets werden, so kann eine Signatur dieses Datenpakets durch den Nutzer überprüft werden, wenn der Nutzer zusätzlich den öffentlichen Messgeräteschlüssel kennt.

Zum Beispiel ist es möglich, dass der Nutzer zu Beginn und zum Ende eines jeden Ladevorgangs die Messgeräteidentifikation und die jeweilige Uhrzeit notiert.

Das Sicherungsmodul erstellt ein Datenpaket, welches vorzugsweise eine Vertrags- oder Kundenidentifikation in dem Datenpaket und zusätzlich beispielsweise die Uhrzeit als auch die Messgeräteidentifikation enthält. Zusätzlich kann das Datenpaket den Messgerätzählerstand und den Messgerätestatus enthalten.

Der Messgerätestatus kann eine Information über die technische Funktionalität der Ladestation enthalten, z.B. ein binärer Wert, der angibt, ob die Ladestation fehlerfrei arbeitet.

Mit Hilfe des privaten Messgeräteschlüssels kann eine Signatur aus diesem Datenpaket erstellt werden. Die Signatur zusammen mit dem Datenpaket kann von dem Sicherungsmodul an die Abrechnungsstation übermittelt werden.

Durch die Signatur des Datenpakets ist sichergestellt, dass die in dem Datenpaket enthaltenen Messwerte und die Information zu dem Ladevorgang untrennbar miteinander verbunden sind. Wird einer der beiden Werte verändert, so ergäbe sich eine andere Signatur. Wenn der Nutzer z.B. auch noch die Zeitinformation selber erfassen kann, kann er auch eine Manipulation des Messwertes, wenn dieser die Zeitinformation beinhaltet, feststellen.

Unter einer elektronischen Signatur können auch mit elektronischen Informationen verknüpfte Daten, mit denen man den Unterzeichner bzw. Signaturersteller identifizieren und die Integrität der signierten elektronischen Informationen prüfen kann, verstanden werden. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten. Eine elektronische Signatur kann unter anderem auch eine digitale Signatur umfassen. Die digitale Signatur kann die rein datentechnische, kryptographische Signatur bezeichnen, bei der kryptographische, mathematische Methoden angewandt werden. "Elektronische Signaturen" können Daten in elektronischer Form, die anderen elektronischen Daten beigefügt oder logisch mit ihnen verknüpft sind und die der Authentifizierung dienen, sein.

Ändern sich bei der Übertragung Werte innerhalb des Datenpakets, so kann empfängerseitig, bspw. in der Abrechnungszentrale, festgestellt werden, dass die mit dem Datenpaket übertragene Signatur nicht zu dem empfangenen Datenpaket passt und eine Veränderung des Datenpakets stattgefunden haben muss. Der Vergleich der empfangenen Signatur mit einer errechneten Vergleichs-Signatur oder der Vergleich eines Referenzwertes mit einem Vergleichs-Referenzwertes ergibt bei veränderten Daten einen Unterschied zwischen diesen beiden Werten.

Gemäß einem Ausführungsbeispiel kann im Messgerät oder der Ladestation oder dem Sicherungsmodul ein Paar aus öffentlichem Messgeräteschlüssel und privatem Messgeräteschlüssel gespeichert sein. Mit Hilfe des privaten Messgeräteschlüssels kann eine Signatur des Datenpaketes erstellt werden. Hierzu kann beispielsweise aus einem dem Datenpaket zugeordneten Referenzwert mit Hilfe des privaten Messgeräteschlüssels ein Kryptogramm errechnet werden. Dieser Referenzwert kann ein Hash-Code sein.

Empfängerseitig, z.B. in einer Abrechnungszentrale kann die Authentizität und Datenintegrität des empfangenen Datenpaketes dadurch überprüft werden, dass das empfangene Kryptogramm mit Hilfe des empfängerseitig bekannten öffentlichen Messgeräteschlüssels entschlüsselt wird und der Referenzwert somit berechnet wird. Ein Vergleich mit einem empfängerseitig aus dem Datenpaket errechneten Referenzwert ermöglicht die Überprüfung der Datenintegrität.

Beispielsweise ist es möglich, dass der öffentliche Messegeräteschlüssel in einer Abrechnungszentrale bekannt ist. Auch kann der öffentliche Messgeräteschlüssel in dem Datenpaket enthalten sein.

Ein Hash-Code kann mittels eines eindeutigen Rechenverfahrens als ein statistisch eindeutiger Referenzwert errechnet werden. Ein Hash-Code kann ein aus einer endlichen Vielzahl von Werten ermittelter Wert sein. Aufgrund der Vielzahl der möglichen Hash-Codes kommt es bei einer Veränderung des Datensatzes zu einem geänderten Hash-Code. Dass zwei unterschiedliche Datensätze einen gleichen Hash-Code erzeugen ist, abhängig von der Anzahl und Art der Koeffizienten zur Berechnung des Hash-Codes, äußerst unwahrscheinlich. Für die diese Wahrscheinlichkeit ist das Verfahren zur Berechnung des Hash-Wertes wesentlich. Beispiele für Hash-Code Berechnungsmethoden können MD2, MD4, MD5, SHA, RIPEMD-160, Tiger, HAVAL, Whirlpool, LM-Hash oder NTLM. Andere Verfahren, insbesondere kryptographische Verfahren sind ebenso geeignet.

Eine kryptologische Hashfunktion sollte zumindest eine Einwegfunktion sein. Sogenannte Einweg-Hashfunktionen (One-Way-Hash Functions, OWHFs) erfüllen die Bedingung, eine Einwegfunktion zu sein, d. h. zu einem gegebenen Ausgabewert h(x) = y ist es praktisch unmöglich, einen Eingabewert x zu finden (engl. preimage resistance). Außerdem ist eine Hashfunktion besser für die Kryptographie geeignet, wenn möglichst keine Kollisionen auftreten. Das heißt, dass für zwei verschiedene Werte x und x' der Hashwert (Hash-Code) möglichst auch verschieden sein sollte: h(x) ungleich h(x'). Ist dies immer der Fall, so kann von einer kollisionsresistenten Hashfunktion (Collision Resistant Hash Function, CRHF) gesprochen werden.

Gemäß einem vorteilhaften Ausführungsbeispiel wird auch vorgeschlagen, dass das Datenpaket mittels eines asymmetrischen Verfahrens signiert wird. Bei diesem Verfahren wird, wie bereits zuvor erläutert, ein privater Schlüssel für eine Signatur verwendet und ein öffentlicher Schlüssel, der empfängerseitig bekannt ist, für die Entschlüsselung der Signatur verwendet.

Um eine Zuordnung eines Messwertes zu einem Mess-Zeitpunkt zu ermöglichen, wird vorgeschlagen, dass das Datenpaket einen Zeit-Index enthält. Ein Zeit-Index kann beispielsweise ein Sekundenindex sein, der über die gesamte Lebensdauer des Ladegeräts im mathematischen Sinne streng monoton wachsend ist und eine natürliche Zahl darstellt. Mit Hilfe dieses Sekundenindexes ist es möglich, eine eineindeutige Zuordnung des Mess-Zeitpunktes zu einem Messwert vorzunehmen. Auch kann ein Betriebssekundenzähler verwendet werden, der eine monoton wachsende natürliche Zahl sein kann, deren Ziel die eindeutige Zuordnung des Zeitpunktes eines Ereignisses zu der als Bezugssystem angenommenen gesetzlichen Zeit ist.

Auch kann das Sicherungsmodul das zu Beginn einer Messung erstellte und signierte Datenpaket und das zum Ende einer Messung erstellte Datenpaket an die Abrechnungszentrale übermitteln um dort aus dem Delta der Messwerte die entnommene Energiemenge berechnen zu können.

Auch kann in der Ladestation oder dem Sicherungsmodul zum Ende eines Ladevorgangs ein Delta aus den Messwerten errechnet werden, wobei dieses Delta zumindest Auskunft über die bezogene Energiemenge geben kann. Ein Datenpaket mit diesem Delta kann an die Abrechnungszentrale übermittelt werden.

Das Sicherungsmodul kann gemäß eines weiteren Aspekts in oder an einer Ladestation angeordnet sein. Dies kann als Nachrüstlösung in der Ladestation angeordnet werden. Das Sicherungsmodul verfügt über eine Ladestationsschnittstelle, eingerichtet zum Empfangen eines ersten Datensatzes von einem Ladestationscontroller, umfassend zumindest Informationen zu einem Ladevorgang.

In der Ladestation kann ein Ladestationscontroller angeordnet sein, der zur Kommunikation mit dem Fahrzeug und einer Zentrale eingerichtet ist. Der Ladestationscontroller überwacht ladestationsseitig den Ladevorgang und kommuniziert mit dem Fahrzeug, insbesondere mittels ISO 15118 und/oder IEC 61851. Im Rahmen des Ladevorgangs kann der Ladestationscontroller verschiedene Informationen zu dem Ladevorgang erfassen, welche oben bereits erwähnt wurden. Diese Informationen kann der Ladestationscontroller in einem Datensatz, beispielsweise in Form eines Datenstroms ausgeben.

Der Ladestationscontroller kann den Datensatz in einem ersten Protokoll ausgeben, welches dazu eingerichtet ist, die Ladestation und den Ladevorgang von extern, mittels einer Zentrale zu steuern. Ein solches Protokoll kann z.B. das OCPP Protokoll sein. Dieses ist jedoch nicht geeignet, Messwerte gesichert zu übertragen.

Das Sicherungsmodul emfängt diesen Datensatz über eine Ladestationsschnittstelle.

Parallel dazu kann das Sicherungsmodul über eine Messgeräteschnittstelle Messgerätezählerstände beziehen. Auch ein solcher Messgerätezählerstand kann die von dem Fahrzeug bezogene Energiemenge repräsentieren und von einem Messgerät erfasst werden und dem Sicherungsmodul zur Verfügung gestellt werden.

Das Messgerät kann das Messgerät sein, welches mit dem Ladestationscontroller gekoppelt ist oder ein weiteres hiervon unabhängiges Messgerät. Ein solches weiteres Messgerät kann im Rahmen einer Nachrüstung zusammen mit dem Sicherungsmodul in der Ladestation verbaut werden. In dem Strompfad zwischen dem Ladestationscontroller und dem elektrischen Auslass an der Ladestation kann das zweite Messgerät angeschlossen werden, welches zur gesicherten Kommunikation mit dem Sicherungsmodul eingerichtet ist.

Das Sicherungsmodul kann dann den bezogenen Messgerätezählerstand nutzen, um den ggf. in dem Datensatz vorhandenen Messgerätezählerstand zu ersetzen und ein Datenpaket zu erstellen, in dem die Information zu dem Ladevorgang aus dem Datensatz zumindest teilweise enthalten sind und zusätzlich der bezogene Messgerätezählerstand. Ein solches Datenpaket kann gesichert an eine Abrechnungszentrale übermittelt werden. Da in dem Datenpaket zumindest die Informationen zu der bezogenen Energiemenge fälschungssicher enthalten sind, können die abrechnungsrelevanten Daten für eine Abrechnung genutzt werden.

Auch ist es möglich, dass das Sicherungsmodul über die Messgeräteschnittstelle die weiteren Informationen, wie beispielsweise Ladestations-ID, Nutzer-ID, Zeitstempel und dergleichen, insbesondere alle oben erwähnten Informationen, selbsttätig z.B. von dem Messgerät erfasst und in Teilen oder gänzlich die Informationen aus dem Datensatz ersetzt.

Das Sicherungsmodul kommuniziert über seine Zentralschnitte mit der Zentrale. Dabei können Signale empfangen und gesendet werden. Das Sicherungsmodul kommuniziert über seine Ladestationsschnittstelle mit dem Ladestationscontroller. Dabei können Signale empfangen und gesendet werden. An der Ladestationsschnittstelle wird ein erstes Protokoll verwendet. An der Zentralschnittstelle wird ein zweites Protokoll verwendet.

Das Sicherungsmodul kann dazu eingerichtet sein, Steuerbefehle über die Zentralschnitte von einer Zentrale zu empfangen und über die Ladestationsschnittstelle auszugeben, wobei hier insbesondere eine Protokollumsetzung stattfindet. Auch kann eine Protokollumsetzung von Befehlen, welche über die Ladestationsschnittstelle empfangen werden in Befehle auf der Zentralschnittstelle erfolgen. Das Sicherungsmodul stellt dabei sicher, dass die abrechnungsrelevanten Daten gesichert an der Zentralschnittstelle zur Verfügung gestellt werden und zusammen mit dem Datenpaket an die Abrechnungszentrale übermittelt werden.

Ein weiterer Aspekt ist eine Ladestation mit einem Messgerät und einem Ladestationscontroller, einem zuvor beschriebenen Sicherungsmodul. Zusätztlich kann ein weiteres Messgerät vorgesehen sein. Das Sicherungsmodul kann mit einem oder beiden Messgeräten verbunden sein.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Die zuvor genannten Verfahren können auch als Computerprogramm oder als auf einem Speichermedium gespeichertes Computerprogramm realisiert werden. Hierbei kann fahrzeugseitig, ladestationsseitig und/oder abrechnungszentralenseitig ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigenden Zeichnung näher erläutert. In der Zeichnung zeigen:
- Fig. 1a: einen schematischen Aufbau eines Systems zum Laden eines Elektrofahrzeugs;
- Fig. 1b: einen schematischen Aufbau eines Systems zum Laden eines Elektrofahrzeugs gemäß einem Ausführungsbeispiel;
- Fig. 2: einen schematischen Aufbau eines Sicherungsmoduls gemäß einem Ausführungsbeispiel;
- Fig. 3: eine beispielhafte Verarbeitung eines Datenpakets in dem Sicherungsmodul;

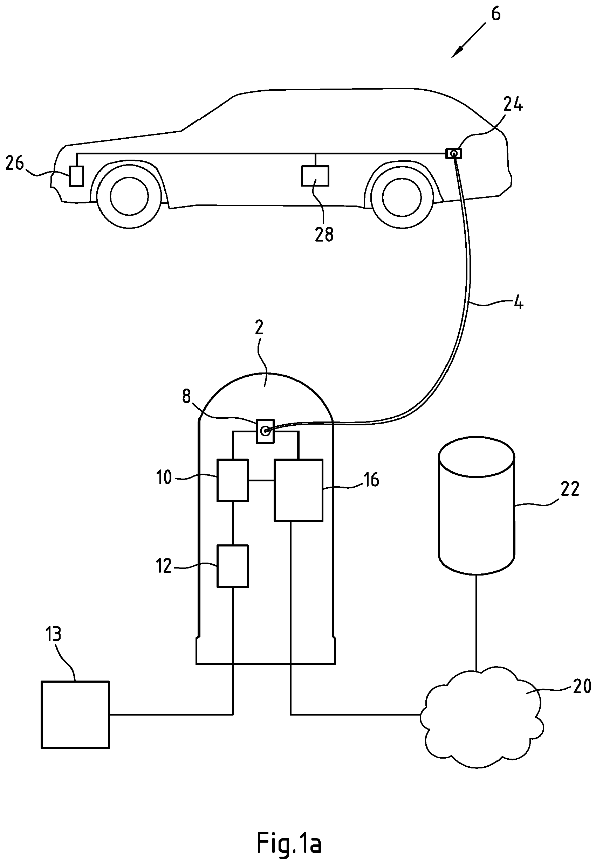

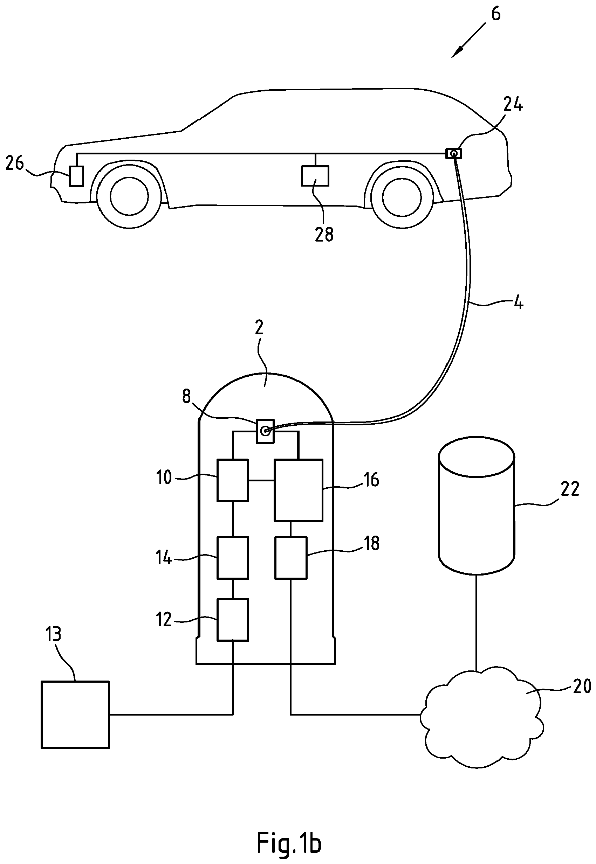

Fig. 1 zeigt eine Ladestation 2 welche über ein Verbindungskabel 4 mit einem Fahrzeug 6 elektrisch verbunden ist. In der Ladestation 2 ist eine Anschlussdose 8 zum Anschluss des Verbindungskabels 4 vorgesehen. Über das Verbindungskabel 4 werden zum Einen Energie übertragen und zum Anderen Daten zwischen Fahrzeug 6 und Ladestation 2 ausgetauscht.

Die Anschlussdose 8 ist elektrisch mit einem Messgerät 10 (zuvor und ggf. nachfolgend als zweites Messgerät bezeichnet) verbunden. Das Messgerät 10 misst die elektrische Leistung, die über die Anschlussdose 8 an das Fahrzeug 6 über das Verbindungskabel 4 abgegeben wird. Die elektrische Leistung wird über einen elektrischen Anschluss 12 von einem elektrischen Energieversorgungsnetz 13 bezogen.

In dem Fahrzeug 6 ist neben einer mit einem Anschluss 24 verbundenen Batterie 26 eine Kommunikationseinheit 28 vorgesehen. Die Kommunikationseinheit 28 ermöglicht das Senden und Empfangen von Daten auf dem Verbindungskabel 4.

Während des Ladevorgangs des Fahrzeugs 6 an der Ladestation 2 wird Energie von dem Energieversorgungsnetz 14 in die Batterie 26 des Fahrzeugs 6 gespeist. Die Menge der eingespeisten Energie wird mittels des Messgeräts 10 erfasst.

Die Energiemenge, repräsentiert durch ein Zählerstand des Messgerätes 10, als auch andere Daten, wie beispielsweise die Identifikation der Ladestation 2 und/oder die Identifikation des Messgerätes 10, ein Zeitstempel, ein Zeit-Index, ein Status der Ladestation 2 und/oder ein Status des Messgerätes 10, ein Anfangszählerstand, ein Endzählerstand und/oder dergleichen kann über das Verbindungskabel 4 an das Fahrzeug 6 und/oder die Abrechnungszentrale 22 übermittelt werden.

Ein Ladestationscontroller 16 kann optional an das Messgerät 10 gekoppelt sein. Der Ladestationscontroller 16 überwacht den Ladevorgang und ist kommunikationstechnisch mit einer Zentrale 22 über ein Weitverkehrsnetz 20 gekoppelt. Der Ladestationscontroller 16 tauscht mit der Zentrale Befehle und Informationen zu dem Ladevorgang mittels eines ersten Protokolls, z.B. mittel OCCP aus. Der Ladestationscontroller 16 tauscht mit dem Fahrzeug 6, insbesondere der Kommunikationseinheit Befehle und Informationen zu dem Ladevorgang mittels eines weiteren Protokolls, z.B. mittel ISO 15118 aus. Der Ladestationscontroller 16 erfasst optional von dem Messgerät 10 Messgerätezählerstände und kombiniert diese zusammen mit Informationen zu dem Ladevorgang in einem Datensatz, der über das erste Protokoll an die Zentrale 22 übermittelt wird.

Die Erfassung des Messgerätezählerstands als auch die Kommunikation mit der Zentrale 22 über das erste Protokoll ist jedoch nicht vor Angriffen gesichert.

Um die Abrechnung von bezogener Energie sicher zu gestalten, wird nun vorgeschlagen, wie in Fig. 1b gezeigt, in der Ladestation 2 ein Sicherungsmodul 18 und optional ein Messgerät 14 (zuvor und ggf. nachfolgend als erstes Messgerät bezeichnet) anzuordnen.

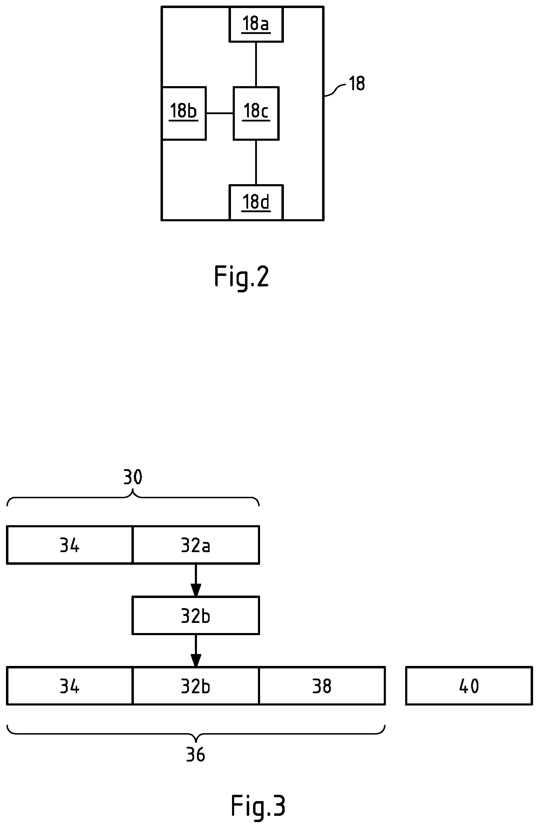

Das Sicherungsmodul 18 ist kommunikationstechnisch zwischen dem Ladestationscontroller 16 und der Zentrale 22 angeordnet. Der Aufbau des Sicherungsmoduls 18 ist beispielhaft in der Fig. 2 gezeigt. Das Sicherungsmodul 18 verfügt über eine Ladestationsschnittstelle 18a, eine Messgeräteschnittstelle 18b, ein Codiermodul 18c, sowie eine Zentralschnittstelle 18d.

Über die Ladestationsschnittstelle 18a empfängt das Sicherungsmodul 18 einen Datensatz des Ladestationscontrollers 16. Dieser kann Informationen zu dem Ladevorgang und optional zumindest einen Messgerätezählerstand des zweiten Messgerätes 10 enthalten . Die Informationen zu dem Ladevorgang können durch den Ladestationscontroller 16 oder das Fahrzeug 6 erfasst werden. Zumindest Teile der Informationen zu dem Ladevorgang werden mit dem Fahrzeug 6 über ein Protokoll, beispielsweise ISO 15118 ausgetauscht. Informationen zu dem Ladevorgang können darüber hinaus Informationen für oder von der Zentrale 22 sein.

Der Ladestationscontroller 16 kommuniziert, wie in Fig. 1 beschrieben, über ein erstes Protokoll mit der Zentrale 22. Gegenständlich ist nun ein Sicherungsmodul zwischen kommunikationstechnisch zwischen dem Ladestationscontroller 16 und der Zentrale 22 angeordnet. Das Sicherungsmodul 18 empfängt die in dem ersten Protokoll von dem Ladestationscontroller 16 ausgesendeten Daten auf der Ladestationsschnittstelle 18a und sendet über die Ladestationsschnittstelle 18a Daten an den Ladestationscontroller 15 in dem ersten Protokoll. Die über die Ladestationsschnittstelle 18a empfangenen Daten werden mit Hilfe des Codiermoduls 18c umgesetzt in ein zweites Protokoll zur Kommunikation mit einer Zentrale 22 und über die Zentralschnittstelle 18d ausgegeben.

Das Sicherungsmodul 18 empfängt die in dem zweiten Protokoll von der Zentrale 22 ausgesendeten Daten auf der Zentralschnittstelle 18d und sendet über die Zentralschnittstelle 18d Daten an die Zentrale 22 in dem zweiten Protokoll. Die über die Zentralschnittstelle 18d empfangenen Daten werden mit Hilfe des Codiermoduls 18c umgesetzt in ein erstes Protokoll zur Kommunikation mit dem Ladestationsconstoller und über die Ladestationsschnittstelle 18a ausgegeben.

Über die Zentralschnittstelle 18d empfangene Informationen von der Zentrale 22 in dem Protokoll zur Kommunikation mit einer Zentrale 22 werden durch das Codiermodul 18c umgesetzt und an der Ladestationsschnittstelle 18a in dem ersten Protokoll ausgegeben.

Das Codiermodul 18c fungiert zunächst als Protokollumsetzer, um eine Kommunikation zwischen der Ladestation 2, insbesondere dem Ladestationscontroller 16 und der Zentrale 22 sicherzustellen. Für den Ladestationscontroller 16 ist das Sicherungsmodul "transparent", das heißt, dass der Ladestationscontroller 16 unverändert, ungeachtet der Anwesenheit des Sicherungsmoduls 18 mit der Zentrale 22 kommuniziert und von dort Befehle empfängt und an die Zentrale 22 Informationen übermittelt.

Das Sicherungsmodul 18 ist nunmehr derart eingerichtet, dass über eine Messgeräteschnittstelle 18b von einem optionalen ersten Messgerät 14 oder dem zweiten Messgerät 10 Messgerätezählerstände empfangen werden können. Die Kommunikation zwischen dem Messgerät 14 und/oder dem Messgerät 10 und dem Sicherungsmodul 18 kann gesichert erfolgen. Insbesondere kann die Kommunikation entsprechend einer Kommunikation gemäß der technischen Richtlinie TR-03109-1 des Bundesamts für Sicherheit in der Informationstechnik erfolgen. Das heißt, dass die Messgerätezählerstände des Messgeräts 14 und/oder des Messgeräts 10 unverfälscht und gesichert in dem Sicherungsmodul 18 empfangen werden.

Das Sicherungsmodul 18 ist nunmehr eingerichtet, die von dem Ladestationscontroller 16 empfangenen Informationen wie oben beschrieben, umzusetzen. Dabei wird zur Kommunikation mit der Zentrale 22 in dem zweiten Protokoll der bezogenen Messgerätezählerstand genutzt und optional ein ggf. in dem von dem Ladestationscontroller 16 emfpangenen Datensatz enthaltener Messgerätezählerstand durch den bezogenen Messgerätezählerstand ersetzt.

Darüber hinaus kann durch das Sicherungsmodul 18 eine Nutzeridentifikation erfasst werden. Das Sicherungsmodul 18 kann ein Transponderlesegerät aufweisen. Dieses Transponderlesegerät kann in dem Sicherungsmodul 18 oder außerhalb angeordnet sein. Über das Transponderlesegerät kann eine Nutzeridentifikation von einem in einem Ladekabelstecker 4a angeordneten Transponder ausgelesen werden.

Auch kann das Transponderlesegerät durch ein anderes Lesegerät ersetzt sein. Zum Beispiel könnte eine Kommunikation mit dem Fahrzeug 2 aufgebaut werden und über einen Pilotleiter des Ladekabels 4 die Nutzeridentifikation erfasst werden.

Auch könnte das Lesegerät eine Tastatur sein, über der der Nutzer seine Nutzeridentifikation eingibt. Auch könnte die Nutzeridentifikation von einer Chipkarte oder Magnetstreifenkarte des Nutzers durch das Lesegerät eingelesen werden.

Auch könnte die Nutzeridentifikation von der Abrechnungszentrale 22 dem Lesegerät zur Verfügung gestellt werden. Dann könnte ein Kunde z.B. einen Ladevorgang telefonisch bei der Abrechnungszentrale 22 unter Nennung der Ladestation ID freigeben. Hierzu müsste er z.B. seine Nutzeridentifikation und ein Passwort der Abrechnungszentrale 22 bekanntgeben. Ist eine Überprüfung des Passworts positiv, so könnte die Abrechnungszentrale 22 z.B. verschlüsselt die Nutzeridentifikation über das Datennetz 20 an die Ladestation 2 und das Lesegerät übermitteln.

Die nunmehr in dem Sicherungsmodul 18 enthaltenen Informationen werden beispielsweise entsprechend der Figur 3 verarbeitet.

Über die Ladestationsschnittstelle 18a empfängt das Sicherungsmodul 18 einen Datensatz 30. Der Datensatz 30 enthält zumindest Informationen 34 zu dem Ladevorgang sowie optional einen Messgerätezählerstand 32a . Neben dem Messgerätezählerstand 32a können Messgerätestatus, eine Messgeräteidentifikation, eine Zeitinformation und/oder weitere oben bereits beschriebene Daten durch das Sicherungsmodul 18 über die Messgeräteschnittstelle von dem Messgerät 10/14 bezogen und in einer vorzugsweise binären Zeichenfolge abgespeichert sein.

Über die Messgeräteschnittstelle 18b bezieht das Sicherungsmodul 18 einen Messgerätezählerstand 32b. Dabei kann es sinnvoll sein, aus den Informationen zu dem Ladevorgang eine Zeitinformation zu extrahieren und korrespondierend zu dieser Zeitinformation den Messgerätezählerstand 32b von dem Messgerät 14 und/oder Messgerät 10 zu beziehen.

Das Codiermodul 18c erstellt ein Datenpaket 38 mit dem Messgerätezählerstand 32b und ersetzt optional nun optional vorhanden Messgerätezählerstand 32a mit dem Messgerätezählerstand 32b. Das Datenpaket 38 enthält zumindest in Teilen die Informationen 34, den Messgerätezählerstand 32b und z.B. die erfassten Nutzeridentifikation 38. Darüber hinaus kann eine Messgeräte-Identifikation des Messgerätes 14/10 als ein eindeutiger Bezeichner des Messgerätes 14/10 in dem Datenpaket 36 enthalten sein. In dem Datenpaket 36 können weitere, durch das Sicherungsmodul bezogene Informationen, wie z.B. ein Messgerätestatus des Messgerätes 14/10, eine Zeitinformation, ein öffentlicher Messgeräteschlüssel des Messgerätes 14/10 und/oder weitere Daten enthalten sein.

Um nun die Abrechnungsdaten sicher zu übertragen, wird vorgeschlagen, dass das Datenpaket 36 umfassend zumindest den Messgerätezählerstand 32b und die Nutzeridentifikation 38 signiert an die Abrechnungszentrale 22 übermittelt wird.

Für eine Authentifizierung des Datenpakets 36 kann eine Signatur 40 erstellt werden. Hierzu wird in einem Rechenschnitt das erste Datenpaket 36 zusammen mit einem privaten Messgeräteschlüssel verwendet, um eine Signatur die 40 zu errechnen. So kann z.B. in dem Rechenschritt ein Hash-Wert aus dem Datenpaket 36 bestimmt werden und dieser Hash-Wert kann mit dem privaten Messgeräteschlüssel in die Signatur 40 umgerechnet werden.

Das erste Datenpakets 36 zusammen mit der Signatur 40 wird an die Abrechnungszentrale 22 übermittelt. Die hieraus erhaltenen Daten können für eine Rechnungserstellung, verwendet werden. Der Nutzer kann die Rechnungsdaten unter Verwendung der Signatur 40 und seiner selbst getätigten Notizen auf Authentizität und Integrität überprüfen.

## Patentansprüche

1. Verfahren zur Sicherung von Messwerten einer Ladestation umfassend:
- Empfangen eines ersten Datensatzes (30) von einem Ladestationscontroller (16) umfassend zumindest Informationen (34) zu einem Ladevorgang
- Beziehen eines Messgerätezählerstand (32b), wobei der bezogene Messgerätezählerstand (32b) die von einem Fahrzeug (6) von der Ladestation (2) bezogene Energiemenge repräsentiert und von einem Messgerät (10/14) erfasst wird,
- Ergänzen des empfangenen des Datensatzes (30) mit dem bezogenen Messgerätezählerstand (32b),
- Erstellen eines Datenpakets (36) umfassend zumindest den Messgerätezählerstand (32b) und zumindest Teile der Information (34) zu dem Ladevorgang aus dem Datensatz (30),
- Erstellen einer eindeutigen Beschreibung (40) des Datenpakets (36),
- Übermitteln zumindest des Datenpakets (36) und der Beschreibung (40) an eine Abrechnungszentrale (22).

2. Verfahren nach Anspruch 1,
**dadurch gekennzeichnet,**
- **dass** der Datensatz (30) in einem ersten Protokoll zur Kommunikation zwischen einer Ladestation (2) und einer Abrechnungszentrale (2), insbesondere in einem OCCP Protokoll, empfangen wird.

3. Verfahren nach Anspruch 1 oder 2,
**dadurch gekennzeichnet,**
- **dass** das Datenpaket (36) und die Beschreibung (38) von der Ladestation (2) an die Abrechnungszentrale (22) in einem zweiten, von dem ersten Protokoll verschiedenen Protokoll zur Kommunikation zwischen einer Ladestation (2) und einer Abrechnungszentrale (22), insbesondere in einem LG2WAN Protokoll, an die Abrechnungszentrale (22) übermittelt wird.

4. Verfahren nach einem der vorangehenden Ansprüche,
**dadurch gekennzeichnet,**
- **dass** mit dem Datensatz (30) ein zweiter Messgerätezählerstand (32a) empfangen wird, wobei der zweite Messgerätezählerstand (32a) die von einem Fahrzeug (6) von der Ladestation (2) bezogene Energiemenge repräsentiert und von einem Messgerät (10) erfasst wird,

5. Verfahren nach einem der vorangehenden Ansprüche,
**dadurch gekennzeichnet,**
- **dass** der empfangene, in dem Datensatz (30) enthaltene zweite Messgerätezählerstands (32a) durch den bezogenen Messgerätezählerstand (32b) ersetzt wird.

6. Verfahren nach einem der vorangehenden Ansprüche,
**dadurch gekennzeichnet,**
- **dass** beim Beziehen des Messgerätezählerstands (32b) von dem Messgerät (10/14) der Messgerätezählerstand (32b) von dem Messgerät (10/14) signiert und/oder verschlüsselt wird.

7. Verfahren nach einem der vorangehenden Ansprüche,
**dadurch gekennzeichnet,**
- **dass** der zweite Messgerätezählerstand (32a) von einem zweiten Messgerät (10) erfasst wird und dass der bezogene Messgerätezählerstand (32a) von einem ersten Messgerät (10) erfasst wird oder dass der zweite Messgerätezählerstand (32a) sowie der bezogene Messgerätezählerstand (32a) von gleichen Messgerät (10/14) erfasst werden, wobei der bezogene Messgerätezählerstand (32b) von dem Messgerät (10/14) signiert und/oder verschlüsselt bereitgestellt wird und der zweite Messgerätezählerstand (32a) von dem Messgerät (10/14) unsigniert und/oder unverschlüsselt bereitgestellt wird.

8. Verfahren nach einem der vorangehenden Ansprüche,
**dadurch gekennzeichnet,**
- **dass** der Datensatz (30) von einem in oder an der Ladestation (2) angeordneten Sicherungsmodul (18) empfangen wird und dass der bezogene Messgerätezählerstand (32b) von dem Sicherungsmodul (18) bezogen wird.

9. Verfahren nach einem der vorangehenden Ansprüche,
**dadurch gekennzeichnet,**
- **dass** das Sicherungsmodul (18) und das erste und/oder zweite Messgerät (10/14) gesichert, insbesondere mittels SML, kommunizieren, insbesondere dass das Sicherungsmodul (18) als Smart Meter Gateway und das erste und/oder zweite Messgerät (10/14) als Messeinrichtung, insbesondere als EDL21 oder EDL40 Zähler, eingerichtet ist.

10. Verfahren nach einem der vorangehenden Ansprüche,
**dadurch gekennzeichnet,**
- **dass** die eindeutige Beschreibung (40) eine Signatur des Datenpaktes (36) ist, insbesondere
- **dass** die eindeutige Beschreibung (40) derart mit dem Inhalt des Datenpakets (38) verknüpft ist, dass eine Veränderung des Inhalts des Datenpakets (38) eine veränderte Beschreibung (40) bewirkt.

11. Verfahren nach einem der vorangehenden Ansprüche,
**dadurch gekennzeichnet,**
- **dass** das Sicherungsmodul (18) das Datenpaket (36) zusätzlich mit einer der Informationen aus
A) einer Messgeräteidentifikation,
B) einem Messgerätestatus,
C) Zeitinformationen,
D) Datumsinformationen,
E) einer Vertragsidentifikation,
F) einem öffentlichen Messgeräteschlüssel (34e);
G) einem Zeit-Index;
anreichert.

12. Verfahren nach einem der vorangehenden Ansprüche,
**dadurch gekennzeichnet,**
- **dass** die eindeutige Beschreibung (40) in dem Sicherungsmodul (18) erstellt wird.

13. Sicherungsmodul (18) für eine Ladestation (2) umfassend:
- eine Ladestationsschnittstelle (18a) eingerichtet zum Empfangen eines ersten Datensatzes (30) von einem Ladestationscontroller (16) umfassend zumindest Informationen (34) zu einem Ladevorgang,
- eine Messgeräteschnittstelle eingerichtet zum Beziehen eines Messgerätezählerstand (32b), wobei der bezogene Messgerätezählerstand (32b) die von einem Fahrzeug (6) von der Ladestation (2) bezogene Energiemenge repräsentiert und von einem Messgerät (10/14) erfasst wird,
- ein Codiermodul eingerichtet zum Erstellen eines Datenpakets (36) umfassend zumindest den bezogenen Messgerätezählerstand (32b) und zumindest Teile der Information (34) zu dem Ladevorgang aus dem Datensatz (30) und zum Erstellen einer eindeutigen Beschreibung (40) des Datenpakets (36),
- eine Zentralschnittelle eingerichtet zum Übermitteln zumindest des Datenpakets (36) und der Beschreibung (40) an eine Abrechnungszentrale (22).

14. Sicherungsmodul nach Anspruch 13,
**dadurch gekennzeichnet,**
- **dass** das Sicherungsmodul (18) in einer Ladestation (2) nachrüstbar ist.

15. Ladestation (2) mit einem Messgerät (10), einem Ladestationscontroller (16) und einem Sicherungsmodul (16) nach Anspruch 14, wobei das Sicherungsmodul (18) mit dem Messgerät (14) verbunden ist.
